# FASCICULE DE BREVET EUROPEEN

(11) **EP 1 592 603 B1**
(45) Date de publication et mention de la délivrance du brevet: **20.09.2006**
(21) Numéro de dépôt: 04710414.6
(22) Date de dépôt: 12.02.2004
(51) Int. Cl.: B62D 25/14

(54) **STRUCTURE DE PIED AVANT D'UN VEHICULE AUTOMOBILE**
VORDERE FUSSANORDNUNG IN EINEM PKW
FRONT PILLAR STRUCTURE OF A MOTOR VEHICLE

(30) Priorité: 12.02.2003 FR 0301645
(43) Date de publication de la demande: 09.11.2005
(73) Titulaire: Renault s.a.s., 92100 Boulogne Billancourt (FR)
(72) Inventeur: DUGUET, Eric, F-75009 Paris (FR)
(86) Numéro de dépôt international: PCT/FR2004/000316
(87) Numéro de publication internationale: WO 2004/074073

(56) Documents cités:
- EP-A- 0 945 294
- FR-A- 2 739 596
- FR-A- 2 745 241
- US-A- 5 269 585

## Description

La présente invention concerne une structure de pied avant d'un véhicule automobile, visant à limiter la rotation autour d'un axe vertical de ce pied avant, et plus particulièrement une structure comportant une doublure de pied avant sur laquelle est solidarisée une doublure de montant de baie, une traverse de planche de bord, un bandeau de porte et un élément de liaison entre la traverse de la planche de bord et le pied avant. EP 0 945 294 décrit une structure de pied avant conformément au préambule de la revendication 1.

Une telle structure limite la rotation, autour d'un axe vertical, du pied avant en cas de choc frontal. Cette rotation est due à la poussée sensiblement longitudinale du bandeau de porte d'une part et à la rotation autour d'un axe vertical du long pied d'autre part. Il est connu, dans différents véhicules automobiles, la présence d'une équerre solidarisée d'une part à la traverse de planche de bord et d'autre part au pied avant. Cette liaison entre l'équerre et le pied avant est réalisée par une vis traversante, selon l'axe transversal du véhicule. Cette vis associé à l'équerre assure ainsi la limitation de la rotation du pied avant, traversée par cette vis.

Cette solution présente l'inconvénient majeur de n'assurer le lien transversal entre la traverse de planche de bord et le pied avant que par la vis traversante. Ce lien transversal nécessaire n'est alors réalisé que de façon partielle et présente de plus une situation de la vis contraignante en après vente.

Un des objectifs de l'invention est donc de proposer une structure de pied avant qui présente des caractéristiques géométriques moins pénalisantes en cas de choc. L'obtention de la non-rotation du pied avant est en effet l'une des conditions nécessaires à la tenue de l'habitacle en cas de choc frontal. Le but est donc d'utiliser les capacités mécaniques (effort suivant une direction transversale et un moment autour d'une direction verticale) de la traverse de planche de bord pour s'en servir comme d'un limiteur de rotation de pied avant.

Un second objectif de l'invention est de réaliser une liaison entre le pied avant et la planche de bord dont la qualité permet de supprimer la vis traversante connue dans l'état de l'art.

En réponse à des objectifs que l'on retrouve invariablement chez les différents constructeurs automobiles, la présente invention se veut également peu coûteuse et peu encombrante.

Pour répondre à ces objectifs, l'invention propose une structure de pied avant du type présenté plus haut, caractérisée en ce qu'un boîtier interne, sur lequel est fixée la planche de bord, est disposé sur la face de la doublure orientée vers l'intérieur du véhicule, en ce qu'un boîtier externe est disposé sur la face de la doublure orientée vers l'extérieur du véhicule, et en ce que ces deux boîtiers sont liés de sorte à constituer une boîte sensiblement fermée. Une fente est réalisée dans la doublure de pied avant et permet le passage d'une bande matière propre à l'un des boîtiers et venant recouvrir le flanc de l'autre boîtier. Cette bande matière peut appartenir au boîtier interne et recouvrir le flanc du boîtier externe, ou appartenir au boîtier externe et recouvrir le flanc du boîtier interne.

Selon une caractéristique de la présente invention, les boîtiers sont liés par des points de soudure au niveau de pattes les prolongeant.

Selon une caractéristique de la présente invention, la dimension longitudinale de l'équerre est supérieure à la dimension longitudinale du boîtier interne.

Selon des caractéristiques de la présente invention, les faces longitudinales des deux boîtiers peuvent présenter un trou débouchant pour permettre le passage d'une vis traversante, être des faces pleines.

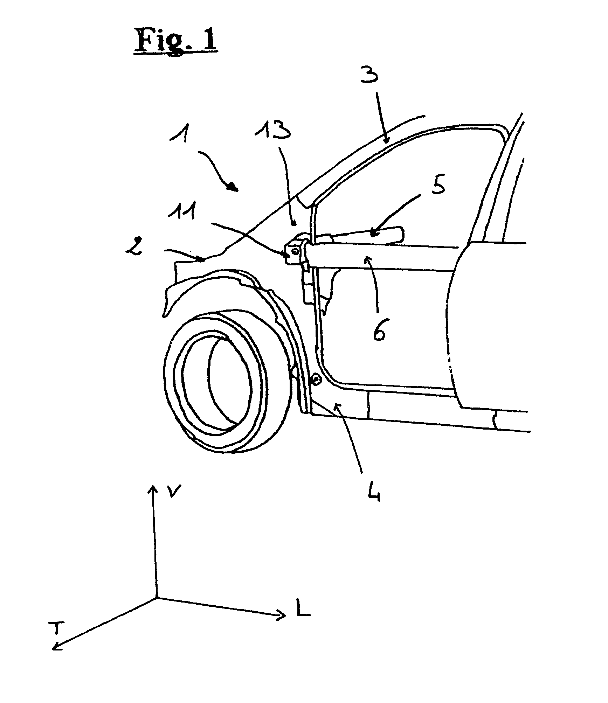

D'autres caractéristiques et avantages de l'invention apparaîtront à la lecture de la description détaillée qui suit pour la compréhension de laquelle on se reportera aux dessins annexés dans lesquels :
- 1a figure 1 est une vue schématique d'une structure latérale avant d'un véhicule automobile, comportant un pied avant gauche semblable à la présente invention.
- la figure 2 est une vue en perspective d'une structure de pied avant gauche selon l'invention, vue depuis l'extérieur du véhicule à l'arrière gauche.
- la figure 3 est une vue schématique d'une structure de pied avant gauche selon l'invention, vue de dessus.
- la figure 4 est une vue schématique d'une structure de pied avant gauche selon un mode de réalisation particulier de l'invention, vue de dessus.
- la figure 5 est une vue schématique d'une structure de pied avant gauche selon l'invention, vue de dessus et après un choc.

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

La figure 1 décrit et représente une structure de pied avant 1 d'un véhicule automobile. Le pied avant 1 représenté ici est un pied avant gauche. La description qui suivra s'appliquera à ce pied avant gauche, et pourra être étendu au pied avant droit, du fait de la symétrie constatée selon l'axe médian du véhicule.

Ce pied avant 1 est un noeud structurel sur lequel repose entre autres un support d'aile 2, un montant de baie 3, un côté de caisse 4, une traverse de planche de bord 5, un bandeau de porte 6 (qui est articulé sur ce pied avant) et un long pied 7. En cas de choc frontal, la rotation de ce pied avant 1 selon un axe vertical entraîne donc la déformation de l'habitacle, ce qui engendre un risque par rapport à le sécurité des passagers et ce qui est donc contraire aux cahier des charges des constructeurs automobiles.

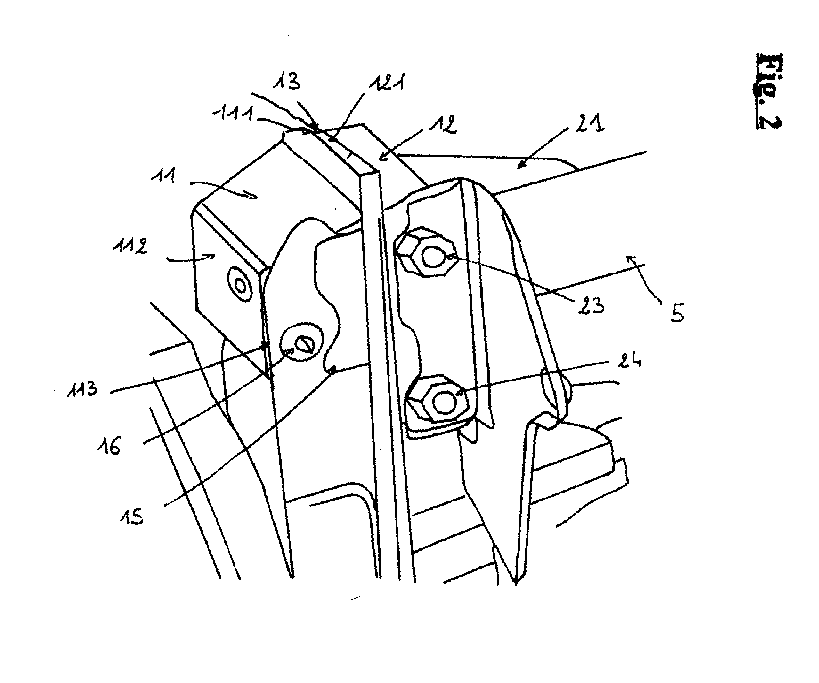

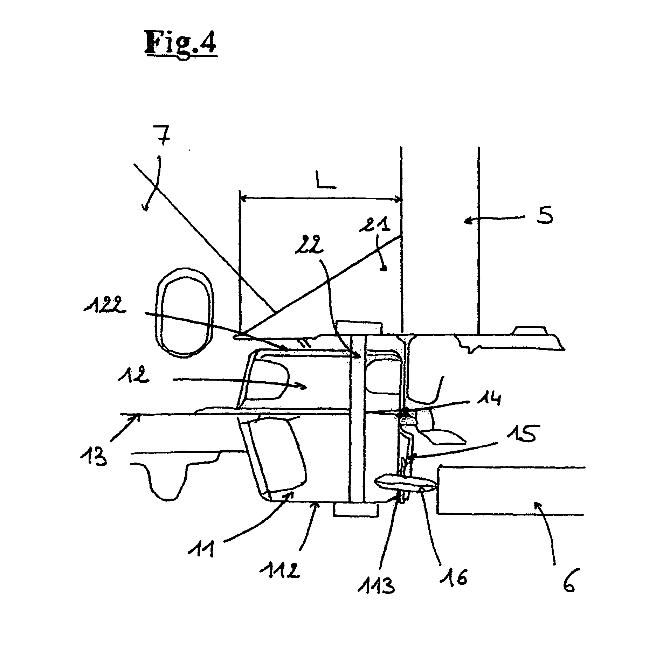

Tel que représenté dans les figures 2 à 5, deux boîtiers 11, 12 sont disposés sur le pied avant 1, à hauteur de la traverse de planche de bord 5. Un premier boîtier 11, dit boîtier externe, est disposé sur la face du pied avant 1 orientée vers l'extérieur du véhicule. De façon correspondante, un second boîtier 12, dit boîtier interne, est disposé sur la face du pied avant 1 orientée vers l'intérieur du véhicule. Ces boîtiers 11, respectivement 12 sont fonctionnellement séparés par une doublure 13 du pied avant 1. Ils possèdent des pattes 111, respectivement 121 et sont disposés en vis à vis, liés par des points de soudure aux niveaux des pattes 111 et 121, de sorte que cet ensemble constitue une boîte sensiblement fermée. Un pion 16, dit « pion anti-burst » est solidarisée sur un flanc transversal 113 du boîtier externe 11, et sert de pion de guidage avec le bandeau de porte 6, de manière à réaliser un accouplement mâle-femelle en cas de choc.

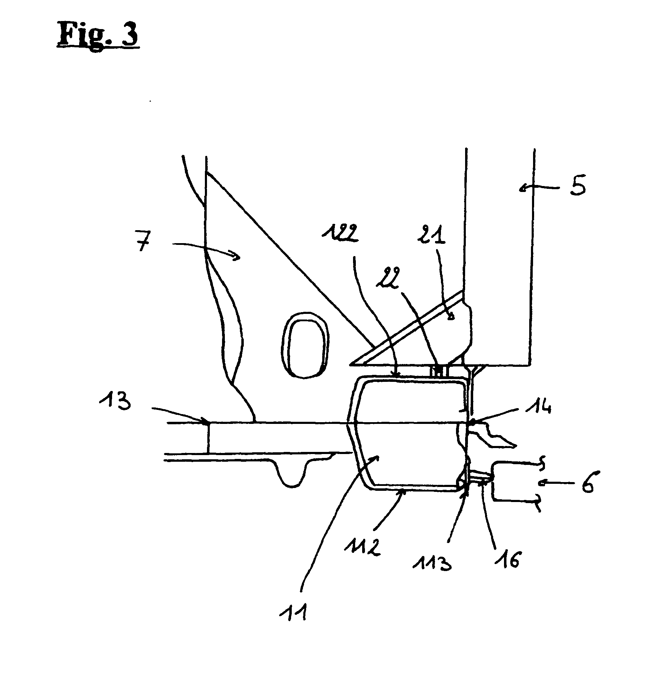

Les dimensions des boîtiers 11 et 12 doivent être telles que les pattes respectives de ces boîtiers sont alignées. La dimension des faces longitudinales 112, 122 de ces boîtiers est donc la même, (à titre d'exemple, au moins supérieure à 100 mm) alors que la dimension transversale peut être différente. Avantageusement, telle que représenté à la figure 3, la dimension transversale du boîtier externe 11 est plus grande que celle du boîtier interne 12. En effet, il est nécessaire d'obtenir un flanc transversal 113 du boîtier externe 11 de dimension suffisamment grande pour éviter que le bandeau de porte 6 ne s'échappe vers l'extérieur du véhicule lors d'une compression de ce bandeau 6 en cas de choc longitudinal.

Tel que représenté dans les figures 2 à 5, compte tenu de la présence de la doublure 13 de pied avant 1, constituant une véritable frontière entre le boîtier interne 12 et le boîtier externe 11, une fente 14 sur la doublure 13 de pied est aménagée afin de permettre le passage d'une bande matière 15 appartenant au boîtier interne 12 et orientée transversalement. La figure 2 représente cette bande 15 recouvrant le flanc du boîtier externe 11, en vis à vis de l'autre côté de la doublure 13. Il sera compris que la bande de matière 15 traversante peut appartenir de façon équivalente au boîtier externe 11 et recouvrir ainsi le flanc du boîtier interne 12, en vis à vis de l'autre côté de la doublure 13.

L'efficacité de cette liaison dite traversante (la bande de matière 15 traverse la doublure de pied 13) est conditionnée par son alignement avec la traverse de planche de bord 5 d'une part, et par le nombre de points de soudures entre la bande 15 traversante et le boîtier en vis à vis, d'autre part. Avantageusement, tel que représentée à la figure 3, la bande de matière 15 traversante a d'une part la même hauteur que la traverse de planche de bord 5. D'autre part, cette bande 15, appartenant à un premier boîtier 11, respectivement 12, est soudée avec le second boîtier en vis à vis 12, respectivement 11, par trois points de soudure.

La liaison entre le pied avant 1 et la planche de bord 5 est double. Premièrement, la planche de bord 5 est solidarisée sur un flanc du boîtier interne 12 par deux fixations sensiblement longitudinales 23, 24. La figure 2 représente un mode de réalisation dans lequel la fixation 23 est située verticalement au niveau de la traverse de planche de bord 5 et la fixation 24 est située plus bas. Avantageusement, les deux fixations 23 et 24 peuvent être disposées de façon équidistante à la traverse de planche de bord 5, symétriquement placées par rapport à l'axe de la traverse de planche bord 5. Deuxièmement, tel que représenté aux figures 3 à 5, une équerre 21 est solidarisée à la traverse de planche de bord 5, et cette équerre 21 est reliée au pied avant 1 par une vis traversante 22, orientée transversalement et qui, dans le cadre de l'invention, traverse le boîtier interne 12, la doublure 13 du pied avant 1 et le boîtier externe 11.

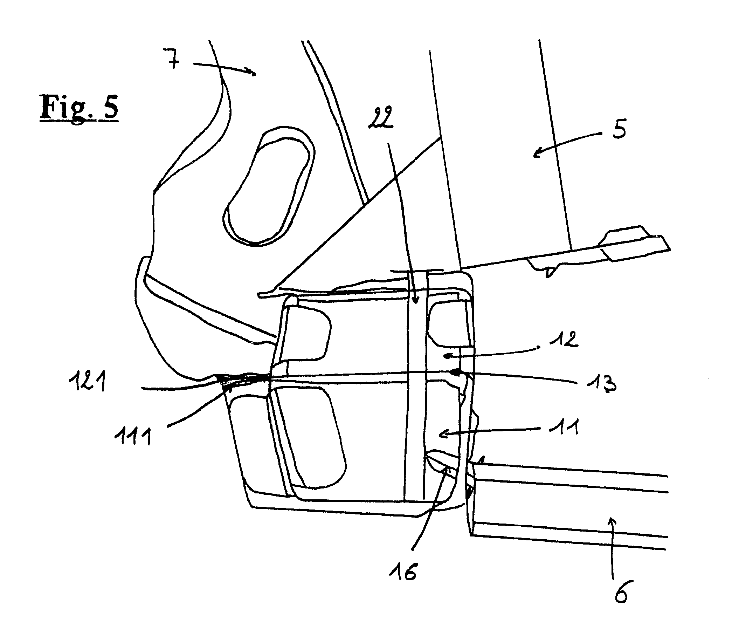

L'équerre 21 reliant la traverse de planche de bord 5 et le pied avant 1 est contenue dans un plan sensiblement horizontal et sa longueur de porte à faux L selon la direction longitudinale du véhicule est légèrement supérieure à la longueur des faces longitudinales 112, 122 des boîtiers 11 et 12. De telles dispositions géométriques permettent, lors d'un choc et du début de la rotation du pied avant 1, un appui de l'équerre 21 sur le boîtier interne 12 (cf. figure 5).

La nature de cette structure offre la possibilité de supprimer la vis traversante 22. Le boîtier interne 12 traversant la doublure 13 de pied avant 1 se substitue à la vis traversante 22 (cf. figure 5). Cette modification, associée à l'équerre 21 de planche de bord 5, contribue par ses qualités géométriques, à améliorer l'isostatisme du pied avant. Compte tenu du gain isostatique obtenu, le pied avant 1 est mieux bloqué en rotation autour de l'axe vertical et favorise la bonne tenue de l'habitacle en cas de choc frontal. La diminution importante de la rotation du pied avant 1 selon un axe vertical en cas de choc permet ainsi de supprimer la vis traversante 22, ou, si cette vis 22 est conservée, de la soulager de l'absorption du choc. Elle peut également permettre de supprimer le pion « anti-burst » 16, pion de guidage entre le pied avant 1 et le bandeau de porte 6 en cas de choc.

L'invention n'est nullement limitée au mode de réalisation décrit et illustré qui n'a été donné qu'à titre d'exemple.

## Revendications

1. Structure de pied avant (1) d'un véhicule automobile, comportant une doublure (13) de pied avant (1) supportant une doublure de montant de baie (3), une traverse de planche de bord (5), un bandeau de porte (6) et un élément de liaison (21) entre la traverse de la planche de bord (5) et le pied avant (1), la fixation de l'élément de liaison (21) sur le pied avant (1) étant réalisée par une vis traversante (22), **caractérisé en ce qu'**un boîtier interne (12), sur lequel est fixée la planche de bord (5), est disposé sur la face de la doublure (13) orientée vers l'intérieur du véhicule, **en ce qu'**un boîtier externe (11) est disposé sur la face de la doublure (13) orientée vers l'extérieur du véhicule, et **en ce que** ces deux boîtiers (11, 12) sont liés de sorte à constituer une boîte sensiblement fermée, une fente (14) étant réalisée dans la doublure (13) de pied avant (1) et une bande matière (15) propre à l'un des boîtiers (11, respectivement 12) passant par cette fente (14) afin de recouvrir le flanc de l'autre boîtier (12, respectivement 11).

2. Structure de pied avant selon la revendication 1, **caractérisé en ce que** les boîtiers (11, respectivement 12) sont liés par des points de soudure au niveau de pattes (111, respectivement 121) prolongeant ces boîtiers.

3. Structure de pied avant selon la revendication 1 ou 2, **caractérisé en ce que** la bande matière (15) appartient au boîtier interne (12) et recouvre le flanc transversal du boîtier externe (11).

4. Structure de pied avant selon la revendication 1 ou 2, **caractérisé en ce que** la bande matière (15) appartient au boîtier externe (11) et recouvre le flanc transversal du boîtier interne (12).

5. Structure de pied avant selon l'une des revendications précédentes, **caractérisé en ce que** la dimension longitudinale L de l'équerre (21) est supérieure à la longueur de la face longitudinale (122) du boîtier interne (12).

6. Structure de pied avant selon l'une des revendications 1 à 5, **caractérisé en ce que** les deux boîtiers (11, 12) ont des faces longitudinales (112, 122) présentant un trou débouchant pour permettre le passage d'une vis traversante (22).

7. Structure de pied avant selon l'une des revendications 1 à 5, **caractérisé en ce que** les deux boîtiers (11, 12) ont des faces longitudinales pleines.

8. Structure de pied avant selon la revendication 6 ou 7, **caractérisé en ce que** le flanc transversal (112) du boîtier externe (11) présente un trou débouchant pour permettre le passage d'un pion 16 de guidage.

9. Structure de pied avant selon la revendication 6 ou 7, **caractérisé en ce que** le flanc transversal (112) du boîtier externe (11) présente une surface pleine.

## Claims

1. Front pillar structure (1) of a motor vehicle, comprising a liner (13) of the front pillar (1) supporting a window post liner (3), a dashboard crossbeam (5), a horizontal door bar (6) and a connecting element (21) between the dashboard crossbeam (5) and the front pillar (1), the connecting element (21) being fixed to the front pillar (1) by a through screw (22), **characterized in that** an inner case (12), to which the dashboard (5) is fixed, is arranged on the face of the liner (13) oriented towards the inside of the vehicle, **in that** an outer case (11) is arranged on the face of the liner (13) oriented towards the outside of the vehicle, and **in that** these two cases (11, 12) are connected so as to form a substantially closed box, a slot (14) being provided in the liner (13) of the front pillar (1) and a strip material (15) belonging to one of the cases (11, respectively 12) passing through this slot (14) in order to cover the side of the other case (12, respectively 11).

2. Front pillar structure according to claim 1, **characterized in that** the cases (11, respectively 12) are connected by spot welds in the region of tabs (111, respectively 121) extending these cases.

3. Front pillar structure according to claim 1 or 2, **characterized in that** the strip material (15) belongs to the inner case (12) and covers the transverse side of the outer case (11).

4. Front pillar structure according to claim 1 or 2, **characterized in that** the strip material (15) belongs to the outer case (11) and covers the transverse side of the inner case (12).

5. Front pillar structure according to one of the preceding claims, **characterized in that** the longitudinal dimension L of the angle bracket (21) is greater than the length of the longitudinal face (122) of the inner case (12).

6. Front pillar structure according to one of claims 1 to 5, **characterized in that** the two cases (11, 12) have longitudinal faces (112, 122) having an emergent hole to allow the passage of a through screw (22).

7. Front pillar structure according to one of claims 1 to 5, **characterized in that** the two cases (11, 12) have solid longitudinal faces.

8. Front pillar structure according to claim 6 or 7, **characterized in that** the transverse side (112) of the outer case (11) has an emergent hole to allow the passage of a guide pin 16.

9. Front pillar structure according to claim 6 or 7, **characterized in that** the transverse side (112) of the outer case (11) has a solid surface.

## Patentansprüche

1. Vorderfußstruktur (1) eines Kraftfahrzeugs, umfassend eine Innenverkleidung (13) des Vorderfußes (1), die eine Innenverkleidung eines Fensteröffnungsträgers (3), eine Querstrebe eines Armaturenbretts (5), ein Türband (6) und ein Verbindungselement (21) zwischen der Querstrebe des Armaturenbretts (5) und dem Vorderfuß (1) trägt, wobei die Befestigung des Verbindungselements (21) auf dem Vorderfuß (1) durch eine durchgehende Schraube (22) verwirklicht ist, **dadurch gekennzeichnet, dass** ein Innengehäuse (12), auf dem das Armaturenbrett (5) befestigt ist, auf der Seite der Innenverkleidung (13) angeordnet ist, die zum Inneren des Fahrzeugs gewandt ist, dass ein Außengehäuse (11) auf der Seite der Innenverkleidung (13) angeordnet ist, die zum Äußeren des Fahrzeugs gewandt ist, und dass diese beiden Gehäuse (11, 12) derart verbunden sind, dass sie einen im Wesentlichen geschlossenen Kasten bilden, wobei ein Schlitz (14) in der Innenverkleidung (13) des Vorderfußes (1) verwirklicht ist und ein Materialband (15), das zu einem der Gehäuse (11 bzw. 12) gehört, durch diesen Schlitz (14) hindurch verläuft, um die Seite des anderen Gehäuses (12 bzw. 11) abzudecken.

2. Vorderfußstruktur nach Anspruch 1, **dadurch gekennzeichnet, dass** die Gehäuse (11 bzw. 12) durch Schweißpunkte im Bereich von Befestigungseisen (111 bzw. 121), die diese Gehäuse verlängern, verbunden sind.

3. Vorderfußstruktur nach Anspruch 1 oder 2, **dadurch gekennzeichnet, dass** das Materialband (15) dem Innengehäuse (12) angehört und die Querseite des Außengehäuses (11) abdeckt.

4. Vorderfußstruktur nach Anspruch 1 oder 2, **dadurch gekennzeichnet, dass** das Materialband (15) dem Außengehäuse (11) angehört und die Querseite des Innengehäuses (12) abdeckt.

5. Vorderfußstruktur nach einem der vorhergehenden Ansprüche, **dadurch gekennzeichnet, dass** die Längsabmessung L des Winkeleisens (21) größer als die Länge der Längsseite (122) des Innengehäuses (12) ist.

6. Vorderfußstruktur nach einem der Ansprüche 1 bis 5, **dadurch gekennzeichnet, dass** die beiden Gehäuse (11, 12) Längsseiten (112, 122) aufweisen, die ein Durchgangsloch besitzen, um den Durchgang einer Durchgangsschraube (22) zu ermöglichen.

7. Vorderfußstruktur nach einem der Ansprüche 1 bis 5, **dadurch gekennzeichnet, dass** die beiden Gehäuse (11, 12) volle Längsseiten aufweisen.

8. Vorderfußstruktur nach Anspruch 6 oder 7, **dadurch gekennzeichnet, dass** die Querseite (112) des Außengehäuses (11) ein Durchgangsloch aufweist, um den Durchgang eines Führungsstiftes 16 zu ermöglichen.

9. Vorderfußstruktur nach Anspruch 6 oder 7, **dadurch gekennzeichnet, dass** die Querseite (112) des Außengehäuses (11) eine volle Fläche aufweist.
